# EUROPÄISCHE PATENTSCHRIFT

(11) **EP 3 305 096 B1**
(45) Veröffentlichungstag und Bekanntmachung des Hinweises auf die Patenterteilung: **27.03.2019**
(21) Anmeldenummer: 17185150.4
(22) Anmeldetag: 07.08.2017
(51) Int. Cl.: A23K 50/42, A23K 10/26, A23K 40/30, A23K 10/20

(54) **TIERNAHRUNG**
PET FOOD
ALIMENTS POUR ANIMAUX

(30) Priorität: 05.10.2016 DE 202016105534 U
(43) Veröffentlichungstag der Anmeldung: 11.04.2018
(73) Patentinhaber: Ruisinger, Herta, 86684 Holzheim/Pessenburgheim (DE); Klaus, Sabine, 47495 Rheinberg (DE)
(72) Erfinder: Ruisinger, Herta, 86684 Holzheim/Pessenburgheim (DE); Klaus, Sabine, 47495 Rheinberg (DE)
(74) Vertreter: Epping - Hermann - Fischer

(56) Entgegenhaltungen:
- DE-A1- 10 124 361
- US-A- 1 721 406
- US-A1- 2012 034 348
- DATABASE WPI Week 201029 2010 Thomson Scientific, London, GB; AN 2010-E23454 XP002777310, & CN 2 887 078 Y (ZHANG S) 11. April 2007 (2007-04-11)
- DATABASE WPI Week 201449 2014 Thomson Scientific, London, GB; AN 2014-N92921 XP002777311, & CN 103 815 442 A (CHEN Z) 28. Mai 2014 (2014-05-28)
- DATABASE WPI Week 200705 2007 Thomson Scientific, London, GB; AN 2007-037746 XP002777312, & JP 2006 325450 A (IGARASHI T) 7. Dezember 2006 (2006-12-07)

## Beschreibung

Die Erfindung betrifft ein Verfahren zur Herstellung eines Tierfutters (sog. Alleinfuttermittel) für Hunde, Katzen, Frettchen oder andere fleischfressende Haustiere.

Traditionelle Alleinfuttermittel gibt es aktuell am Markt in drei Varianten:
(1) Dosenfutter
(2) Trockenfutter
(3) Rohfutter (auch BARF genannt)

Sowohl bei (1) als auch bei (2) werden sämtliche Komponenten gemeinsam und etappenweise einem Verarbeitungsprozess unterzogen, der von einem mehr oder minder (sog. "kaltgepressten Futter") starken Erhitzungsvorgang begleitet wird.

Dies führt zu zwei Problemen:
(a) Die Proteinstrukturen des Fleisches verändern sich (sog. "Denaturierung"). Die strukturelle Veränderung der Eiweiße und/oder der Desoxyribonukleinsäure (DNS) ist i.d.R. mit einem Verlust der biologischen Funktion dieser Moleküle verbunden ist, obgleich deren Primärstruktur unverändert bleibt. Dadurch wird das Fleisch z.B. für den Hund, dessen Organismus bestmöglich auf die Verwertung von rohem Fleisch eingestellt ist, schwerer verdaulich.
(b) Die meisten Vitamine verlieren durch die Erhitzung ihre Nährstoffe, ganz oder teilweise, so dass diese nachträglich künstlich wieder hinzugefügt müssen.

Die BARF Ernährung, d.h. die Fütterung mit rohen Komponenten aus Fleisch, Obst und Gemüse, umgeht die unter (a) und (b) dargelegten Probleme, ist für den Tierbesitzer aber nicht sehr anwenderfreundlich, da eine täglich frische Zubereitung zeitaufwendig ist oder die Vorratshaltung im Tiefkühlgerät verlangt. Dadurch ist diese Nahrung quasi sehr wenig "mobil", d.h. kann schlecht mit auf Reisen etc. genommen werden und ist generell in der täglichen Handhabung eher schwierig.

Um das unter (b) geschilderte Problem zu vermeiden, gibt es von einigen Herstellern parallel zum Fleisch sog. "Mix-Produkte", d.h. eine Mischung aus Gemüseflocken (z.T. mit Getreide etc.) kann zusätzlich unters Futter gemischt werden. Hier besteht jedoch die Gefahr der Selektion durch das Haustier, da Obst und Gemüse oft gerne im Napf beiseitegeschoben und dann nicht oder nur teilweise gefressen werden.

Genau diese unbeliebten Zutaten sind jedoch für die Gesundheit und das Wohlbefinden der Haustiere wichtig, da diese für eine ausgewogene Ernährung sorgen und auch wichtige Vitamine enthalten.

Aus der US 2012/034348 A1 ist ein Tierfutter aus Fleisch und einem Überzug bekannt, wobei der Überzug unter anderem aus Obst oder Gemüse bestehen kann. Das Fleisch wird nach Aufbringen des Überzuges bei Temperaturen von über 165°F (d.h. über 74°C) gekocht bzw. getrocknet.

Die US 1,721,406 A offenbart gekochtes Fleisch, das mit einem Überzug aus Käse versehen ist.

Das Dokument DE 101 24 361 A1 beschreibt ein Munching-Produkt mit Trockenfleisch, das von einem Teig und einer Würzschicht umgeben ist. Der Überzug besteht aus einer handelsüblichen, pulverförmigen Paniermischung und einer Würzung aus z. B. einer Paprika-Zwiebel-Mischung und wird frittiert.

Im Dokument DATABASED WPI XP-002777310 wird die Herstellung eines Trockenfisches beschrieben, der mit einer Flüssigschicht aus Bier, Pfeffer, Zwiebel, Ingwer und Salz, danach mit einer Schicht aus Kartoffelpuder umhüllt wird und anschließend frittiert wird.

Das Dokument DATABASED WPI XP-002777311 beschreibt ein ähnliches Verfahren, wobei getrockneter Fisch von Fischleim und Fruchtpuder umgeben wird.

Das Dokument DATABASED WPI XP-002777312 offenbart noch ein ähnliches Verfahren, wobei hier der Trockenfisch mit Fischleim und Fruchtpulver umhüllt ist.

Der Erfindung liegt daher die Aufgabe zugrunde, ein Verfahren zur Herstellung eines Tierfutters aufzuzeigen, welches die starke Erhitzung von Dosen- und Trockenfutter vermeidet und mit dem ein Tierfutter hergestellt werden kann, das den Haustieren gleichzeitig eine Selektion der Zutaten nicht erlaubt.

Erfindungsgemäß wird diese Aufgabe gelöst durch ein Verfahren zur Herstellung eines Tierfutters umfassend Trockenfleisch mit den Merkmalen des Anspruchs 1, welches zumindest teilweise mit einem Überzug versehen ist.

Als Trockenfleisch wird schonend getrocknetes bzw. gedörrtes Fleisch verwendet. In den Überzug können die ,unbeliebten' Zutaten integriert werden und dem Tier ist es nicht möglich, diese vom üblicherweise beliebten Trockenfleisch zu trennen und somit nur das Trockenfleisch ohne die gesunden, aber jedoch unbeliebten Zutaten zu fressen.

Als Trockenfleisch können ebenso schonend getrocknete bzw. gedörrte andere tierische Bestandteile wie z.B. Innereien, Sehnen, Organe (Herz, Leber und Niere), Körperteile (wie z.B. Ohren, Haut etc.) verwendet werden.

Der Überzug wird zumindest aus Obst und/oder Gemüse und einem Bindemittel zwecks Anhaftung an den Fleischkörper gebildet. Das Bindemittel bewirkt, dass das Obst und Gemüse innerhalb des Überzuges fest mit dem Trockenfleisch verbunden ist und an diesem sozusagen klebt. Alternativ wird der Überzug aus Käse gebildet oder umfasst zumindest Käse.

Gemäß einer Ausführungsform wird der Überzug nur teilweise, z.B. nur über die Hälfte des Trockenfleisches, ausgebildet. Dies erhöht die Fressattraktivität, ebenso wie bei Nagerkräckern, den sogenannten "Dippern".

Gemäß einer weiteren bevorzugten Ausführungsform weist der Überzug auch zumindest einen der folgenden Zusätze auf: Vitamine, Mineralstoffe, Öle und Kräuter.

Durch die Mixtur des Überzuges können diesem in einfacher Weise gesunde Zusätze wie Vitamine, Mineralstoffe, Öle und Kräuter neben dem Obst und/oder Gemüse beigefügt werden. Gemäß einer bevorzugten Ausführungsform wird das Bindemittel durch Süßkartoffel gebildet.

Die Verwendung einer Süßkartoffel als Bindemittel gewährleistet, dass das Bindemittel zu 100 % ökologisch ist und auch als Bindemittel ein Gemüse verwendet wird.

Gemäß einer weiteren bevorzugten Ausführungsform wird die gesamte Oberfläche des Trockenfleisches mit dem Überzug versehen.

Dies hat den Vorteil, dass möglichst viel Oberfläche des Trockenfleisches verwendet wird, um das Trockenfleisch mit den unbeliebten, jedoch gesunden Zutaten zu versehen.

Gemäß weiteren bevorzugten Ausführungsformen hat das Trockenfleisch die Form eines Würfels, eines Streifens oder einer Kugel. Das Schneiden des Trockenfleisches in Würfel oder Streifen hat den Vorteil, dass viel Oberfläche zum Aufbringen des Überzuges vorhanden ist. Die maximale Oberfläche wird durch die Kugelform erreicht.

Gemäß einer weiteren bevorzugten Ausführungsform weist der Überzug eine Dicke von 1 bis 5 mm auf und das Tierfutter wird nur aus dem Trockenfleisch und dem Überzug gebildet.

Nachfolgend wird anhand zweier in den Figuren dargestellter Ausführungsbeispiele die Erfindung näher erläutert. In den Zeichnungen zeigen:
Figur 1 eine Schrägansicht des Tierfutters,
Figur 2 einen Schnitt durch das Tierfutter gemäß Figur 1,
Figur 3 eine Schrägansicht des Tierfutters in alternativer Form und
Figur 4 ein Schnitt durch das Tierfutter gemäß Figur 3.
Figur 5 eine Schrägansicht des Tierfutters in Kugelform und
Figur 6 ein Schnitt durch das Tierfutter gemäß Figur 5.

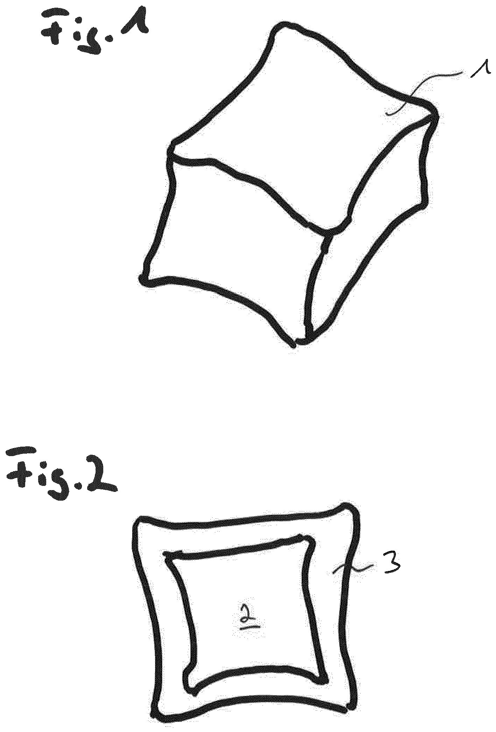

Figur 1 zeigt in Schrägansicht das erfindungsgemäße Tierfutter 1, wobei dieses aus einem würfelförmig geschnittenen Trockenfleisch 2 (siehe Figur 2) und einem das Trockenfleisch 2 umgebenden Überzug 3 gebildet ist. Der Überzug 3 enthält für das Haustier gesunde Zutaten, wie Obst und/oder Gemüse und/oder Zusätze in Form von Vitaminen, Mineralstoffen oder Ölen. Diese Zutaten sind mit einem Bindemittel, einem sogenannten "Kleber", verbunden, mit welchem das getrocknete Fleisch 2 umhüllt ist. Als Kleber wird vorzugsweise die Stärke einer Süßkartoffel verwendet. Es können jedoch auch andere Bindemittel, wie Mehl, Reis, Buchweizen oder Getreide verwendet werden.

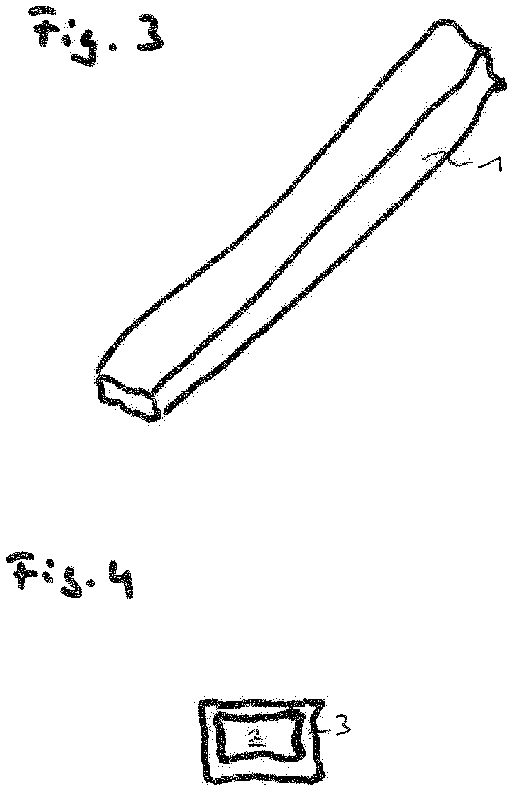

Die Figuren 3 und 4 zeigen eine andere Ausführungsform des Tierfutters, wobei hier das Trockenfleisch in länglichen Streifen vorliegt und ebenfalls mit einem Überzug 3 versehen ist.

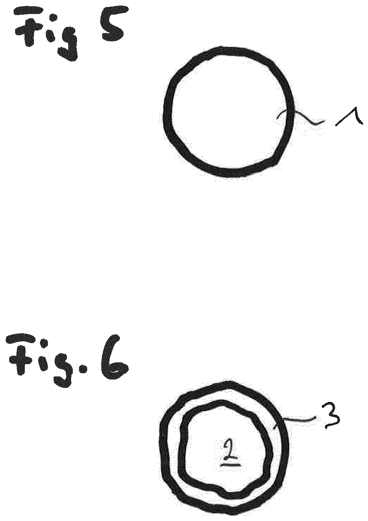

Die Figuren 5 und 6 zeigen eine weitere Ausführungsform des Tierfutters, wobei hier das Trockenfleisch Kugelform vorliegt und ebenfalls mit einem Überzug 3 versehen ist.

Auch andere Formen, welche nicht in den Figuren dargestellt sind, sind denkbar und von der Erfindung umfasst.
Durch das Umhüllen des Trockenfleisches mit einem Überzug, welcher die unbeliebten Zutaten wie Obst, Gemüse und Zusätze enthält, ist es den Haustieren nicht möglich, die unbeliebten Zutaten zu selektieren und nur die beliebten Zutaten zu fressen. Gemeinsam mit der Wahl von schonend getrocknetem Fleisch, dessen Proteinstrukturen weitgehend unverändert sind, führt dies zu einer wesentlich besseren und ausgewogeneren Ernährung der Haustiere.
Ein weiterer Vorteil ergibt sich dadurch, dass Trockenfleisch auch ein Kauartikel ist und das Haustier beim Kauen des mit einem Überzug versehenen Trockenfleisches stets zuerst den Überzug mit den weniger beliebten Zutaten durch Beißen und durch Kauen verspeist und immer von innen der beliebte Geschmack des Trockenfleisches nachströmt, welches das Tier dazu veranlasst, weiterhin das erfindungsgemäße Tierfutter zu kauen und zu fressen.
Die Erfindung kommt hauptsächlich bei Alleinfuttermitteln zur Verwendung, ist aber ebenso für Ergänzungs- und Mischfuttermittel einsetzbar. Die Erfindung ist daher nicht auf Alleinfuttermittel beschränkt.

Der Umfang der Erfindung ist durch die Ansprüche definiert.

## Patentansprüche

1. Verfahren zur Herstellung eines Tierfutters (1) umfassend Trockenfleisch (2), welches zumindest teilweise mit einem Überzug (3) versehen ist,
**dadurch gekennzeichnet, dass**
- folgende tierischen Bestandteile zur Bildung des Trockenfleisches allein oder in Kombination schonend getrocknet bzw. gedörrt werden: Fleisch, Innereien, Sehnen, Organe wie z.B. Herz, Leber und Niere und Körperteile wie z.B. Ohren oder Haut und
- anschließend das Trockenfleisch (2) mit einem Überzug (3) zumindest aus Obst und/oder Gemüse und einem Bindemittel oder einem Überzug (3) vollständig oder teilweise aus Käse versehen wird.

2. Verfahren zur Herstellung eines Tierfutters (1) nach Anspruch 1, **dadurch gekennzeichnet, dass** der Überzug (3) zumindest einen der folgenden Zusätze
aufweist: Vitamine, Mineralstoffe, Öle, Kräuter.

3. Verfahren zur Herstellung eines Tierfutters (1) nach zumindest einem der vorhergehenden Ansprüche,
**dadurch gekennzeichnet, dass** das Bindemittel aus Süßkartoffel gebildet ist.

4. Verfahren zur Herstellung eines Tierfutters (1) nach zumindest einem der vorhergehenden Ansprüche, **dadurch gekennzeichnet, dass** die gesamte Oberfläche des Trockenfleisches (2) mit dem
Überzug (3) versehen wird.

5. Verfahren zur Herstellung eines Tierfutters (1) nach zumindest einem der vorangehenden Ansprüche, **dadurch gekennzeichnet, dass** das Trockenfleisch die Form eines Würfels oder Streifens hat.

6. Verfahren zur Herstellung eines Tierfutters (1) nach zumindest einem der vorangehenden Ansprüche, **dadurch gekennzeichnet, dass** der Überzug (3) eine Dicke von 1 bis 5 mm aufweist.

7. Verfahren zur Herstellung eines Tierfutters (1) nach zumindest einem der vorangehenden Ansprüche, **dadurch gekennzeichnet, dass** das Tierfutter nur aus Trockenfleisch (2) und dem Überzug (3) gebildet wird.

## Claims

1. Method for producing animal food (1) including dry meat (2), which is at least partially provided with a coat (3), **characterized in that**
- the following animal constituents are gently dried or dehydrated per se or in combination to form the dry meat: meat, innards, tendons, organs such as heart, liver and kidney, and body parts such as ears or skin, and
- subsequently, the dry meat (2) is provided with a coat (3) of at least fruit and/or vegetables and a binder, or a coat (3) completely or partially of cheese.

2. Method for producing animal food (1) according to claim 1, **characterized in that** the coat (3) comprises at least one of the following additives: vitamins, minerals, oils, herbs.

3. Method for producing animal food (1) according to at least one of the preceding claims, **characterized in that** the binder is made of sweet potato.

4. Method for producing animal food (1) according to at least one of the preceding claims, **characterized in that** the entire surface of the dry meat (2) is provided with the coat (3).

5. Method for producing animal food (1) according to at least one of the preceding claims, **characterized in that** the dry meat has the shape of a cube or strip.

6. Method for producing animal food (1) according to at least one of the preceding claims, **characterized in that** the coat (3) has a thickness of 1 to 5 mm.

7. Method for producing animal food (1) according to at least one of the preceding claims, **characterized in that** the animal food is formed only of dry meat (2) and the coat (3).

## Revendications

1. Procédé servant à fabriquer des aliments pour animaux (1) comprenant de la viande séchée (2), laquelle est pourvue au moins en partie d'un enrobage (3),
**caractérisé en ce que**
- des composants suivants d'origine animale sont séchés ou déshydratés avec soin seuls ou en combinaison pour former la viande séchée : chair, viscères, tendons, organes tels que le coeur, le foie et les reins, et des parties corporelles telles que les oreilles ou la peau, et
- puis la viande séchée (2) est pourvue d'un enrobage (3) composé d'au moins de fruits et/ou de légumes et d'un liant ou d'un enrobage (3) composé en totalité ou en partie de fromage.

2. Procédé servant à fabriquer des aliments pour animaux (1) selon la revendication 1, **caractérisé en ce que** l'enrobage (3) présente au moins un des additifs suivants : vitamines, substances minérales, huiles, herbes.

3. Procédé servant à fabriquer des aliments pour animaux (1) selon au moins l'une quelconque des revendications précédentes, **caractérisé en ce que** le liant est formé à partir de patate douce.

4. Procédé servant à fabriquer des aliments pour animaux (1) selon au moins l'une quelconque des revendications précédentes, **caractérisé en ce que** la surface totale de la viande séchée (2) est pourvue de l'enrobage (3).

5. Procédé servant à fabriquer des aliments pour animaux (1) selon au moins l'une quelconque des revendications précédentes, **caractérisé en ce que** la viande séchée a la forme d'un cube ou d'un ruban.

6. Procédé servant à fabriquer des aliments pour animaux (1) selon au moins l'une quelconque des revendications précédentes, **caractérisé en ce que** l'enrobage (3) présente une épaisseur allant de 1 à 5 mm.

7. Procédé servant à fabriquer des aliments pour animaux (1) selon au moins l'une quelconque des revendications précédentes, **caractérisé en ce que** les aliments pour animaux sont formés seulement à partir de viande séchée (2) et de l'enrobage (3).
